# EUROPEAN PATENT APPLICATION

(11) **EP 4 642 086 A1**
(43) Date of publication of application: **29.10.2025**
(21) Application number: 24783947.5
(22) Date of filing: 11.01.2024
(51) Int. Cl.: H04W 24/08

(54) **SENSING METHOD, SENSING APPARATUS, AND COMPUTER-READABLE STORAGE MEDIUM**

(30) Priority: 06.04.2023 CN 202310384585
(71) Applicant: ZTE Corporation, Shenzhen, Guangdong 518057 (CN)
(72) Inventor: HAN, Zhiqiang, Shenzhen, Guangdong 518057 (CN); JIANG, Chuangxin, Shenzhen, Guangdong 518057 (CN); PENG, Focai, Shenzhen, Guangdong 518057 (CN); LIU, Juan, Shenzhen, Guangdong 518057 (CN); LOU, Junpeng, Shenzhen, Guangdong 518057 (CN); YANG, Qi, Shenzhen, Guangdong 518057 (CN)
(74) Representative: Ziebig Hengelhaupt Intellectual Property Attorneys Patentanwaltskanzlei PartGmbB
(86) International application number: PCT/CN2024/071835
(87) International publication number: WO 2024/207862

(57) **Abstract**

Disclosed are a sensing method, a sensing apparatus, and a computer-readable storage medium. The sensing method comprises: receiving a capability message sent by a second communication node, wherein the capability message comprises sensing capability information of at least one transmission reception point of the second communication node.

## Description

The present disclosure claims the priority of Chinese Patent Application No. 202310384585.0 filed on April 06, 2023, the entire content of which is incorporated in the present disclosure by reference.

### TECHNICAL FIELD

The present disclosure relates to the field of communication technologies, and in particular, to a sensing method, a sensing apparatus and a computer-readable storage medium.

### BACKGROUND

Currently, in communication networks, a transmission reception point of a base station may send a sensing signal, and the sensing signal is scattered by an environment and a sensed target, and then transmission reception points of other base stations receive the scattered signal, thereby acquiring related information of the environment and the sensed target. However, because the signals received by the transmission reception points of the other base stations are scattered differently by the environment and the sensed target, the accuracy of information indicated by a part of the scattered signals is relatively low. In this case, it will result in a waste of communication resources occupied by the part of the signals.

### SUMMARY

In an aspect, embodiments of the present disclosure provide a sensing method, applied to a first communication node. The sensing method includes: receiving a capability message sent from a second communication node, the capability message including sensing capability information of at least one transmission reception point of the second communication node.

In another aspect, the embodiments of the present disclosure provide a sensing method, applied to a second communication node. The sensing method includes: sending a capability message to a first communication node, the capability message including sensing capability information of at least one transmission reception point of the second communication node.

In yet another aspect, the embodiments of the present disclosure provide a communication node. The communication node includes: a receiving unit, configured to receive a capability message sent from a second communication node, the capability message including sensing capability information of at least one transmission reception point of the second communication node.

In yet another aspect, the embodiments of the present disclosure provide a communication node. The communication node includes: a sending unit, configured to send a capability message to a first communication node, the capability message including sensing capability information of at least one transmission reception point of the second communication node.

In yet another aspect, the embodiments of the present disclosure provide a sensing apparatus, and the sensing apparatus includes: a memory and a processor. The memory is coupled with the processor; the memory is configured to store a computer program; and the processor implements the sensing method described in the above aspects when executing the computer program.

In yet another aspect, the embodiments of the present disclosure provide a computer-readable storage medium, computer program instructions are stored on the computer-readable storage medium, and the computer program instructions, when executed by a processor, implement the sensing method described in the above aspects.

In yet another aspect, the embodiments of the present disclosure provide a computer program product, the computer program product includes computer program instructions, and the computer program instructions, when executed by a processor, implement the sensing method described in the above aspects.

### BRIEF DESCRIPTION OF THE DRAWINGS

The drawings that need to be used in some embodiments of the present disclosure will be briefly introduced below. The drawings described herein are used to provide a further understanding of the present disclosure, and form a part of the present disclosure, and the illustrative embodiments of the present disclosure and descriptions thereof are used to explain the present disclosure, but do not constitute an improper limitation on the present disclosure.
FIG. 1 is a diagram of an application scenario of a sensing service according to some embodiments of the present disclosure.
FIG. 2 is a diagram of a network architecture applied to a sensing service according to some embodiments of the present disclosure.
FIG. 3 is a schematic flowchart of a sensing method according to some embodiments of the present disclosure.
FIG. 4 is a schematic diagram of an orientation of an antenna panel according to some embodiments of the present disclosure.
FIG. 5 is a schematic diagram of a scenario of mono-static sensing according to some embodiments of the present disclosure.
FIG. 6 is a schematic diagram of a scenario of bi-static sensing according to some embodiments of the present disclosure.
FIG. 7 is a schematic flowchart of another sensing method according to some embodiments of the present disclosure.
FIG. 8 is a schematic flowchart of yet another sensing method according to some embodiments of the present disclosure.
FIG. 9 is a schematic flowchart of yet another sensing method according to some embodiments of the present disclosure.
FIG. 10 is a schematic diagram of a scenario of multiple transmission reception points according to some embodiments of the present disclosure.
FIG. 11 is a schematic flowchart of yet another sensing method according to some embodiments of the present disclosure.
FIG. 12 is a schematic flowchart of yet another sensing method according to some embodiments of the present disclosure.
FIG. 13 is a schematic flowchart of yet another sensing method according to some embodiments of the present disclosure.
FIG. 14 is a schematic flowchart of yet another sensing method according to some embodiments of the present disclosure.
FIG. 15 is a structural schematic diagram of a communication node according to some embodiments of the present disclosure.
FIG. 16 is a structural schematic diagram of another communication node according to some embodiments of the present disclosure.
FIG. 17 is a structural schematic diagram of a communication apparatus according to some embodiments of the present disclosure.

### DETAILED DESCRIPTION

To enable those skilled in the art to better understand the technical solutions of the embodiments of the present disclosure, the following will describe the technical solutions in the present disclosure clearly and completely, in conjunction with the drawings in the present disclosure, and obviously, the described embodiments are only a part of the embodiments of the present disclosure, not all of the embodiments. Based on the embodiments of the present disclosure, all other embodiments obtained by those ordinary skilled in the art without making inventive efforts fall within the scope of protection of the present disclosure.

It should be noted that in the present disclosure, terms such as "exemplary (exemplarily)" or "for example" are used to represent examples, illustrations, or descriptions. Any embodiment or design solution described with "exemplary (exemplarily)" or "for example" should not be interpreted as being more preferred or advantageous than other embodiments or design solutions. Specifically, the use of the terms such as "exemplary (exemplarily)" or "for example", etc., is intended to present related concepts in a specific manner.

Hereinafter, the terms such as "first", "second", etc., are used only for descriptive purposes and cannot be construed as indicating or implying relative importance or implicitly indicating the number of the indicated technical features. Thus, features limited with "first", "second" may explicitly or implicitly include one or more of the features.

In the description of the present disclosure, unless otherwise specified, the symbol "/" means "or", and for example, A/B may represent A or B. Herein, "and/or" is only used to describe an associated relationship between associated objects, representing that there may be three relationships, and for example, A and/or B may represent three cases: only A, A and B, and only B. Additionally, "at least one" means one or more, and "multiple/plurality of" means two or more.

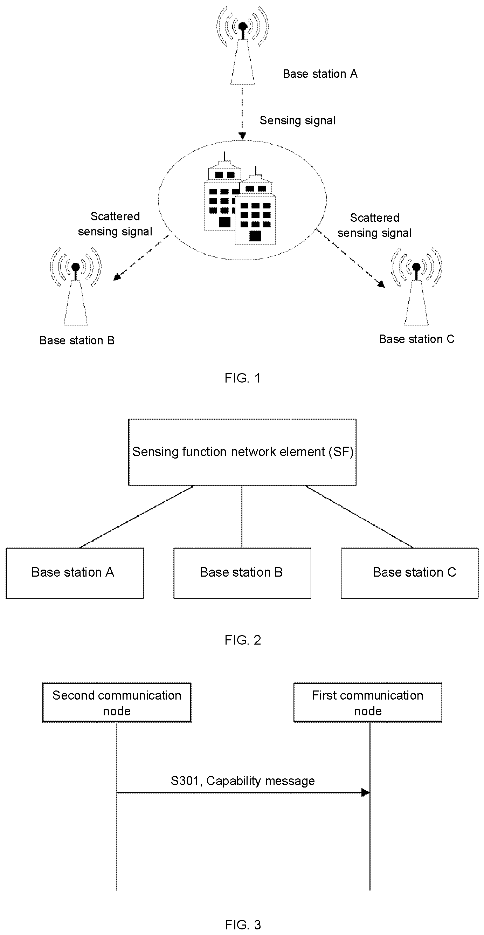

FIG. 1 is a diagram of an application scenario of a sensing service. Base station A sends a sensing signal, which is then scattered by an environment and a sensed target and then received by base station B and base station C. The sensed target may include a building, a vehicle, and other objects in the environment. Currently, the sensing service may acquire related information of a location and movement speed of the sensed target through propagation of the sensing signal. Because distances between base station A and other base stations may be different, and different scattering conditions of the sensing signal during the transmission, sensing information and sensing information respectively acquired by base station B and base station C based on the received scattered signals are different. For a base station having the received signal with weaker strength, the accuracy of the acquired sensing information is lower, and for example, due to severe signal blocking between base station B and base station A, the strength of the signal received by base station B is weaker. Therefore, base station B is not suitable for performing the sensing service with base station A, which results in a waste of communication resources occupied by the part of the sensing signals.

Therefore, the present disclosure provides a diagram of a network architecture applied to the sensing service as follows. As shown in FIG. 2, the network architecture includes a sensing function network element (sensing function, SF) and multiple base stations (such as base station A, base station B, and base station C shown in the figure).

The sensing function network element is configured to manage sensing operations of the base stations, such as receiving sensing capability information of the base stations, participating in negotiation procedures of coordination sensing between the base stations, and sending configuration information related to sensing to the base stations. In the embodiments of the present disclosure, the naming of the sensing function network element is exemplary, and the sensing function network element may have other names, which will be not limited thereto.

In some embodiments, the sensing function network element may be a network element in a core network. Alternatively, the sensing function network element may be a device in an access network, and for example, the sensing function network element may be a base station.

In some embodiments, the sensing function network element may be a stand-alone device. Alternatively, the sensing function network element may be integrated into an existing device of the communication network.

It should be understood that the embodiments of the present disclosure do not limit the number of sensing function network elements and base stations, and may be implemented based on one or more sensing function network elements and one or more base stations.

The base station may be also referred to as a radio access network node (RAN node) or an access network device. The radio access network node is configured to implement functions of a radio physical layer, resource scheduling and radio resource management, radio access control and mobility management function, quality of service (QoS) management, data compression and encryption, and other functions. The access network device provides communication coverage for a specific geographic area, and communicates with terminal devices in the covered area (cell). The base station may be various forms of control nodes, such as a network controller or a radio controller (e.g., a radio controller in a cloud radio access network (CRAN) scenario), etc. The base stations include various forms of macro base stations, micro base stations (also referred to as small stations), relay stations, and access points (APs), etc.

The base station includes one or more transmission reception points (TRPs), for receiving and/or transmitting signals. Each TRP may have different communication capabilities. For example, a number of antennas or a direction of an antenna panel for implementing TRP communication functions may be different, so that different TRPs have different communication capabilities.

In systems using different radio access technologies, names of devices with base station functions may be different. For example, a name of a device with base station functions, may be an evolved base station (evolved NodeB, eNB or eNodeB) in a Long Term Evolution (LTE) system, may be a micro base station eNB in a heterogeneous network (HetNet) scenario, may be a base band unit (BBU) and a remote radio unit (RRU) in a distributed base station scenario, may be a base band pool (BBU pool) and an RRU in a CRAN scenario, or may be a next-generation base station node (next generation node base station, gNB) in a 5G system or an NR system, and the present disclosure does not limit the names of the base stations. The access network device may also be an access network device in a future-evolved public land mobile network (PLMN).

In conjunction with the architecture shown in FIG. 2 above, as shown in FIG. 3, it is a schematic flowchart of a sensing method according to the embodiments of the present disclosure. A first communication node is a sensing function network element, and a second communication node is a base station. The sensing method includes the following S301.

In S301, the second communication node sends a capability message to the first communication node. Accordingly, the first communication node receives the capability message.

The capability message includes sensing capability information of at least one transmission reception point of the second communication node.

It can be understood that in a base station with multiple transmission reception points (muti-TRP), signal transmission modes for each transmission reception point may be configured, so that the transmission reception points transmitting different signals implement the corresponding functions. For example, in a base station with multiple transmission reception points, a part of transmission reception points for transmitting signals, and another part of transmission reception points for receiving signals, may be divided from the multiple transmission reception points. Alternatively, in future integrated communication and sensing systems, the communication function and the sensing function are combined together, thus, the base station may configure a part of transmission reception points for communication and sensing, and another part of transmission reception points for communication only or for sensing only.

In some embodiments, the sensing capability information of the transmission reception point includes sensing reception capability information and/or sensing transmission capability information.

The sensing transmission capability information includes at least one of parameters as follows: subcarrier spacing of a sensing signal, a bandwidth of a sensing signal, a carrier reference point, a transmission period of a sensing signal, a transmission direction of a sensing signal, and power of a sensing signal.

The information of the sensing receiving capability includes at least one of parameters as follows: subcarrier spacing of a sensing signal, a bandwidth of a sensing signal, a carrier reference point, a reception period of a sensing signal, and a reception direction of a sensing signal.

In a new radio (NR) system, the supported subcarrier spacing of the sensing signal includes 15KHz, 30KHz, 60KHz, 120KHz, and 240KHz. The bandwidth of the sensing signal represents the amount of data transmitted from the sensing signal in unit time. The transmission period of the sensing signal and the reception period of the sensing signal represent a time period of transmitting the sensing signal and a time period of receiving the sensing signal, respectively.

In some embodiments, the sensing capability information is reception capability information and/or the transmission capability information of a remote interference management-reference signal (RIM-RS). The remote interference management-reference signal may be used for sensing.

It should be understood that the RIM-RS is used to solve the interference between base stations with a long distance therebetween due to an atmospheric waveguide phenomenon. Multiplexing the RIM-RS is conducive to saving communication resources occupied by the sensing signal, thereby reducing the system overhead.

The transmission capability information of the RIM-RS includes at least one of: subcarrier spacing supported by the RIM-RS, a bandwidth of the RIM-RS, a common carrier reference point of the RIM-RS (RIM-RS-CommonCarrierReferencePoint), a signal offset list (RIM-RS-StartingFrequencyOffsetldList), a transmission period of the RIM-RS, a transmission direction of the RIM-RS, and signal power of the RIM-RS.

Currently, the subcarrier spacing supported by the RIM-RS includes 15KHz and 30KHz. In the NR system, when the RIM-RS is multiplexed as the sensing signal, the subcarrier spacing may be extended to 60KHz, 120KHz or 240KHz.

Since communication resources for receiving signals have not been pre-configured for the RIM-RS currently, communication resources may be configured for receiving sensing signals, in the embodiments provided in the present disclosure, and reference may be made to the sensing reception capability information in the above S301.

In some embodiments, the sensing capability information also includes configuration information of a transmission reception point for transmitting the RIM-RS.

In some embodiments, based on the RIM-RS being multiplexed as the sensing signal, the second communication node may send first indication information to the first communication node; accordingly, the first communication node receives the first indication information. The first indication information is used to indicate that the RIM-RS is multiplexed as the sensing signal. In this way, the first communication node may know that the second communication node multiplexes the RIM-RS as the sensing signal.

In some embodiments, the capability message also includes an identity of the second communication node and an identity of at least one transmission reception point of the second communication node. It should be understood that the identity of the transmission reception point contained in the capability message is associated with the sensing capability information of the transmission reception point contained in the capability message, so that the receiver can know a transmission reception point corresponding to each sensing capability information.

In some embodiments, the capability message also includes configuration information of at least one transmission reception point of the second communication node. The configuration information of the transmission reception point includes at least one of: a number of reception transmission antennas of the transmission reception point, a panel direction of the transmission reception point, location information of the transmission reception point (TRP location information), a sensing mode supported by the transmission reception point (supporting sensing mode), a transmission environment of the transmission reception point, and a maximum proportion of available sensing resources.

The maximum proportion of available sensing resources is used to indicate a proportion of communication resources for implementing a sensing function by the transmission reception point. That is, it is a proportion of communication resources for transmitting the sensing signal in the transmission reception point to communication resources possessed by the transmission reception point.

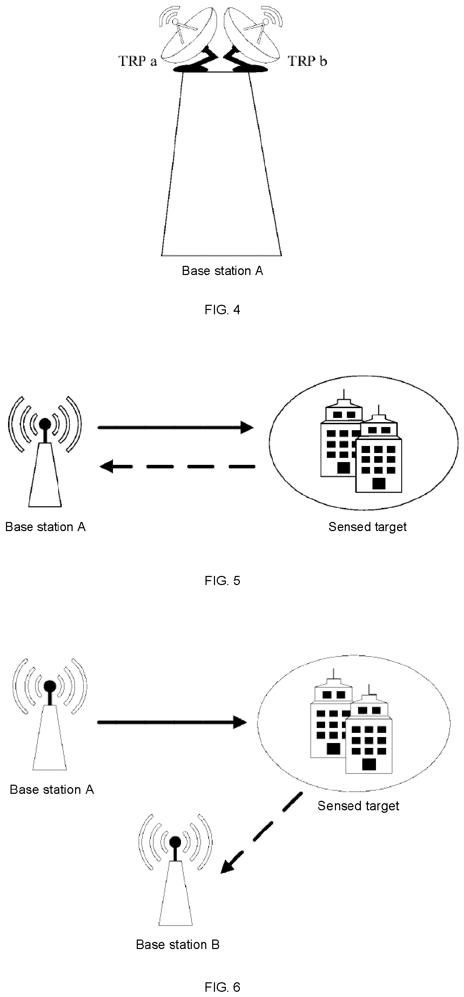

Each transmission reception point may include several antennas for receiving and transmitting signals, and at least one antenna panel. The number of reception transmission antennas and the direction of the antenna panel decide the communication capability of the transmission reception point. When the second communication node includes multiple transmission reception points, the number of reception transmission antennas is the same or different among the transmission reception points. A transmission reception point with a larger number of reception transmission antennas has a stronger communication capability. The direction of the antenna panel of each transmission reception point decides the direction of the signal reception and transmission. Exemplarily, as shown in FIG. 4, base station A includes TRP a and TRP b, TRP a and TRP b have different panel directions, and accordingly, the directions of the signal transmissions based on TRP a and TRP b are also different.

It can be understood that due to the differences in the number of reception transmission antennas and panel directions possessed by different transmission reception points, the above-mentioned sensing transmission capability information and sensing reception capability information have a corresponding relationship with the transmission reception point.

The location information of the transmission reception point is used to indicate a location coordinate of the transmission reception point. In a case where the second communication node has multiple transmission reception points, each transmission reception point may be distinguished by the location coordinate.

The sensing mode supported by the transmission reception point includes mono-static sensing and bi-static sensing. The mono-static sensing refers to that the base station transmits the sensing signal and receives an echo signal reflected by a sensed target, to obtain the location of the sensed target, and other information. As shown in FIG. 5, it is a schematic diagram of a scenario of mono-static sensing, where base station A transmits the sensing signal and receives the echo signal reflected by the sensed target. The bi-static sensing refers to that the transmitter and the receiver of the sensing signal are located on different base stations. As shown in FIG. 6, base station A transmits the sensing signal, the sensing signal is then reflected by the sensed target, and then base station B receives the echo signal.

The transmission environment of the transmission reception point includes two environments: line-of-sight (line of sight, LOS) transmission and non-line-of-sight (non line of sight, NLOS) transmission. The LOS represents that the signal is almost unblocked during its transmission, and the signal attenuation is weaker, that is, the transmission environment is relatively open. The NLOS represents that the signal is blocked during its transmission, and the signal attenuation is stronger, that is, the transmission environment is relatively complex.

In the embodiments of the present disclosure, acquiring the sensing capability information of each transmission reception point of the communication node, and transmitting or receiving the sensing signal according to the sensing capability information of the transmission reception point, solves the problem that the impacts of the environment on the signals during the transmission of the sensing signals cannot be determined, so that the sensing information acquired after a part of the signals are transmitted cannot be utilized, thereby resulting in a waste in signal resources; and reduces a waste in resources and improves the transmission efficiency of the sensing signal.

In conjunction with the network architecture shown in FIG. 2, the sensing function network element collects sensing capability information of the base stations, the sensing capability information includes sensing transmission capability information and/or sensing reception capability information of the base stations, which is conducive for the sensing function network element to configure transmission modes of sensing signals for one or more base stations based on the sensing capability information of the base stations, so that the sensing signal may convey sensing information more accurately in the corresponding transmission mode, thereby improving the usage efficiency of resources occupied by the sensing signals.

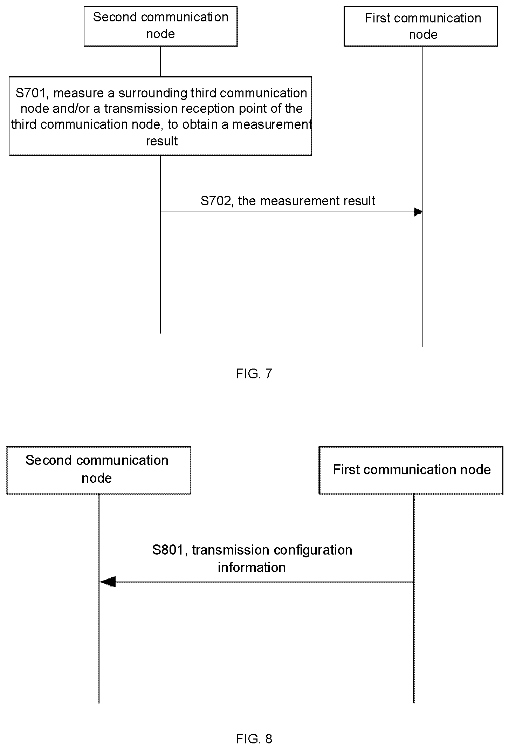

In some embodiments, as shown in FIG. 7, the embodiments of the present disclosure also provide another sensing method, and the sensing method includes the following S701 and S702.

In S701, the second communication node performs measurement for a surrounding third communication node and/or a transmission reception point of the third communication node, to obtain a measurement result.

As an implementation, the second communication node detects a reference signal (or other signals) of the surrounding third communication node and/or the transmission reception point of the third communication node, to obtain the measurement result.

The measurement result includes at least a measurement metric. Exemplarily, the measurement metric may be represented by a peak-to-average power ratio (peak to average power ratio, PAPR) of the signal.

In some embodiments, the measurement result may also include an identity of the third communication node and/or an identity of the transmission reception point of the third communication node.

As an example, in a case where the second communication node measures the signal of the third communication node, the measurement result includes the identity of the third communication node and the measurement metric of the third communication node.

As an example, in a case where the second communication node measures the signal of the transmission reception point of the third communication node, the measurement result includes the identity of the third communication node, the identity of the transmission reception point of the third communication node, and the measurement metric of the transmission reception point of the third communication node.

As an example, when the second communication node measures the signals of the third communication node and the transmission reception point of the third communication node, the measurement result includes the identity of the third communication node, the identity of the transmission reception point of the third communication node, the measurement metric of the third communication node, and the measurement metric of the transmission reception point of the third communication node.

In some embodiments, the measurement result also includes a measurement direction and/or a transmission environment. The measurement direction is used to indicate a direction in which the second communication node receives the signal. The transmission environment is represented by LOS or NLOS.

It should be understood that there are one or more third communication nodes surrounding the second communication node. The second communication node may perform measurement for all of the third communication nodes, or perform measurement for only a part of the third communication nodes. Each third communication node measured by the second communication node has its own corresponding measurement result.

In some embodiments, the second communication node may perform measurement actively, to obtain the measurement result.

In some other embodiments, the second communication node may perform measurement based on an indication of the first communication node, to obtain the measurement result.

Exemplarily, the first communication node may send measurement configuration information to the second communication node. The second communication node receives the measurement configuration information and performs measurement based on the measurement configuration information. The measurement configuration information is used to configure the second communication node to measure the signal of the transmission reception point of the third communication node, and the measurement configuration information includes a measurement direction and/or measurement time.

It can be understood that the first communication node sends the measurement configuration information to the second communication node, so that the second communication node performs measurement according to the measurement direction and/or the measurement time indicated by the first communication node, which is conducive to improving the measurement efficiency.

The measurement direction is used to indicate a direction in which the second communication node receives the measurement signal. The measurement time is used to indicate a measurement frequency of the second communication node.

As an example, the above-mentioned measurement configuration information also includes an identity of a transmission reception point in the second communication node, which is used to indicate the transmission reception point that performs the measurement, in the second communication node.

In S702, the second communication node sends the measurement result to the first communication node. Accordingly, the first communication node receives the measurement result sent from the second communication node.

In some embodiments, the measurement result is reported actively. For example, the second communication node actively feeds back the measurement result to the first communication node.

In some other embodiments, the measurement result is reported passively. For example, the second communication node feeds back the measurement result to the first communication node, based on an indication of the first communication node.

Exemplarily, the above-mentioned measurement configuration information also includes a reporting mode for the measurement result. The second communication node feeds back the measurement result, based on the reporting mode for the measurement result, according to the measurement configuration information. The reporting mode for the measurement result includes a reporting period, and the reporting period is used to indicate a reporting frequency for the measurement result of the second communication node.

In the embodiments of the present disclosure, the first communication node can know a signal transmission condition between the transmission reception point surrounding the second communication node and the second communication node based on the measurement result fed back by the second communication node. Then, the first communication node may configure a suitable transmission reception point for assisting the sensing, for the second communication node.

In some embodiments, as shown in FIG. 8, the embodiments of the present disclosure provide yet another sensing method, and the sensing method includes the following S801.

In S801, the first communication node sends transmission configuration information to the second communication node. Accordingly, the second communication node receives the transmission configuration information sent from the first communication node.

The transmission configuration information includes sending configuration information and/or reception configuration information of a sensing signal of a transmission reception point of the second communication node.

The sending configuration information and/or the reception configuration information includes an identity of the transmission reception point in the second communication node, subcarrier spacing of the sensing signal, a bandwidth, a carrier reference point, etc.

It should be noted that the above-mentioned transmission configuration information may be configured for a part of transmission reception points in the second communication node, which is not limited to configuring all of the transmission reception points in the second communication node. The configuration information for different transmission reception points may be the same or different.

In the embodiments of the present disclosure, the first communication node sends the transmission configuration information to the second communication node, which may enable the second communication node to receive/transmit the sensing signal more reasonably based on the transmission configuration information, so as to improve the resource utilization of the sensing signal.

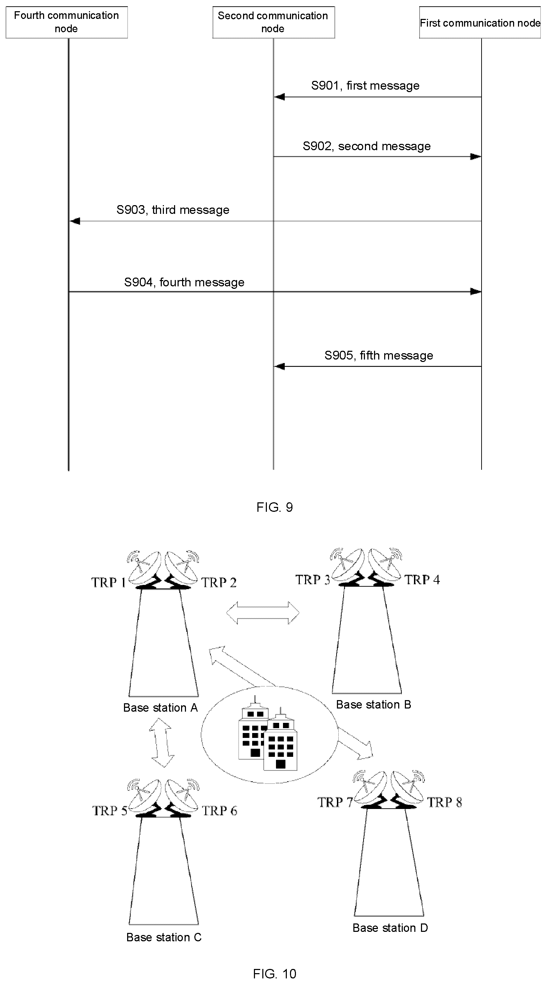

In some embodiments, as shown in FIG. 9, the embodiments of the present disclosure provide yet another sensing method, and the sensing method includes the following S901 to S905.

In S901, the first communication node sends a first message to the second communication node. Correspondingly, the second communication node receives the first message sent from the first communication node.

The first message includes information of a candidate transmission reception point, and the candidate transmission reception point refers to a transmission reception point used to assist the second communication node in sensing. For example, the candidate transmission reception point may complete the sensing service by transmitting a sensing signal to the second communication node.

It can be understood that in the current transmission process of sensing signals, signal attenuation occurs due to scattering from the environment and signal blocking from objects, thereby affecting the information transmission. The first communication node chooses one or more candidate transmission reception points suitable for the sensing service for the second communication node, according to the sensing capability information of the second communication node, and sensing signals transmitted from the one or more candidate transmission reception points experience relatively weak signal attenuation during the transmission, which may retain the information more completely, and may be conducive to improving the transmission efficiency of the sensing signals.

In some embodiments, the first message may also include a measurement method for the candidate transmission reception point. The measurement method includes one or more of a measurement direction, a measurement time, and a micro-Doppler.

In some embodiments, the first message may also include a reporting mode for the measurement result. The reporting mode for the measurement result includes a data type and a triggering condition by which the transmission reception point in the second communication node reports the measurement result. The data type includes the measurement result being raw data or processed data or processed result. The triggering condition includes a reporting period, a reporting event, or a threshold value for the signal strength. For example, the measurement result is reported according to the period, or reported in a case where the signal strength exceeds the threshold value.

In some embodiments, the first message may also include a sensing resource configuration, and the sensing resource configuration is used to indicate a time-frequency domain resource for transmitting the sensing signal.

In some embodiments, the first message may have other names, such as a sensing configuration message (sensing configuration information), which is not limited thereto.

In some embodiments, the first communication node determines the candidate transmission reception point based on related information (e.g., sensing capability information and/or measurement result) of a communication node (e.g., a third communication node) surrounding the second communication node.

As an implementation, the first communication node determines information of the candidate transmission reception point according to the sensing transmission capability information of the second communication node and the sensing reception capability information of the third communication node. That is, whether there is a corresponding transmission reception point for receiving the sensing signal in the third communication node is determined according to one or more of the following items of at least one transmission communication point in the second communication node, so as to take the transmission reception point as the candidate transmission reception point, the items includes: subcarrier spacing of the sensing signal, a bandwidth of the sensing signal, a carrier reference point, a transmission period of the sensing signal, a transmission direction of the sensing signal, and power of the sensing signal.

The first communication node may select, according to location information, a transmission reception point with a distance from the second communication node within a preset area range, as the candidate transmission reception point. The first communication node may select, according to a panel direction of the transmission reception point in the second communication node, a transmission reception point to which a corresponding panel direction belongs in the third communication node, as the candidate transmission reception point. The first communication node selects a transmission reception point with a supported sensing mode being the bi-static sensing in the third communication node, as the candidate transmission reception point. The first communication node selects a transmission reception point with the transmission environment being LOS, as the candidate transmission reception point. The first communication node selects a transmission reception point with a higher maximum proportion of available sensing resources, as candidate transmission reception points.

It should be noted that the determination strategies of the first communication node based on the above-mentioned information may also include other modes. For example, the first communication node may determine according to the priority order of the above-mentioned information. For example, it prioritizes the determination of transmission reception points that meet the condition of the location information, and then further chooses a candidate transmission reception point according to other information.

In some embodiments, the first communication node determines a preset number of candidate transmission reception points based on the above-mentioned information.

It should be noted that the number of the third communication nodes mentioned above may be one or more, and the transmission reception points contained in the third communication node may be one or more, which is not limited thereto.

As another implementation, the first communication node, by acquiring measurement results obtained by the second communication node performing measurement for the surrounding transmission reception points, determines information of the candidate transmission reception point based on the measurement results.

It can be understood that in the determination process, the determination may be performed in priority order. For example, transmission reception points with stronger signal strength may be prioritized to be selected, and then the candidate transmission reception point may be chosen.

In some embodiments, the second communication node, after receiving the first message, may select a first transmission reception point from the candidate transmission reception point indicated by the first message. In the embodiments of the present disclosure, a communication node to which the first transmission reception point belongs may be referred to as a fourth communication node briefly.

In an implementation, the second communication node, based on location information of transmission reception points in the second communication node, determines one or more candidate transmission reception points with closest distances, respectively, as the first transmission reception point.

For example, as shown in FIG. 10, it is assumed that the second communication node is base station A, and TRPs in base station B, base station C, and base station D are all candidate transmission reception points. Base station A may determine first transmission reception points for TRP 1 and TRP 2, respectively, according to location information of other base stations. For example, in a case where TRP 1 is a second transmission reception point, a first transmission reception point may include TRP 5 or TRP 6. In a case where TRP 2 is a second transmission reception point, a first transmission reception point may include TRP3 or TRP 4. The number of first transmission reception points may be predefined in base station A, or not limited.

It should be noted that the second communication node may also determine the first transmission reception point and the second transmission reception point according to other information. As shown in FIG. 10 again, signal blocking between base station D and base station A is relatively severe, and for example, the signal blocking is known through the measurement by base station A to obtain the signal strength of base station D, the signal blocking is known through base station A measuring the signal transmission environment as NLOS, while signal transmission environments between base station B as well as base station C and base station A are relatively open. In this case, base station A may determine the first transmission reception point for TRP 1 as TRP5 and TRP 6, and the first transmission reception point for TRP 2 as TRP3 and TRP 4.

Of course, the second communication node may also determine the first transmission reception point and the second transmission reception point based on information of more or less candidate transmission reception points, and the present disclosure is not limited thereto.

In some embodiments, after the first transmission reception point is selected, the second communication node may negotiate with the fourth communication node via the first communication node, whether the first transmission reception point assists the sensing.

In S902, the second communication node sends a second message to the first communication node. Accordingly, the first communication node receives the second message sent from the second communication node.

The second message may be a response message for the first message. The second message is used to indicate information of the first transmission reception point selected by the second communication node from the candidate transmission reception point, and an identity of a second transmission reception point in the second communication node. The first transmission reception point is used to assist the second transmission reception point in sensing. The information of the first transmission reception point includes an identity of the first transmission reception point and an identity of a communication node to which the first transmission reception point belongs.

In some embodiments, the second message may have other names, such as a sensing configuration confirmation (sensing configuration confirm) message, which is not limited thereto.

In some embodiments, a second transmission reception point may be matched with one or more first transmission reception points. Assistance sensing may be performed between two transmission reception points that are successfully matched.

In some embodiments, the first transmission reception point may be one or more, and the second transmission reception point may also be one or more. It can be understood that in a case where the second transmission reception point is multiple, the second message may also indicate the first transmission reception point matched with each second transmission reception point, or the second message may also indicate a matching relationship between the second transmission reception point and the first transmission reception point.

In some embodiments, after receiving the second message, the first communication node may determine a third transmission reception point that supports to assist in sensing, from the first transmission reception point. Exemplarily, the first communication node may determine the third transmission reception point by the following S903 and S904.

It should be understood that if the first transmission reception point determined by the second communication node is the third transmission reception point by default, the following S903 to S905 may not be performed.

In S903, the first communication node sends a third message to the fourth communication node. Accordingly, the fourth communication node receives the third message sent from the first communication node.

The third message is used to request the first transmission reception point to assist the second transmission reception point in sensing. The third message includes an identity of the first transmission reception point and an identity of the second transmission reception point. In some embodiments, the third message also includes location information, sensing capability information, and a reporting mode for sensing information of the second transmission reception point.

The sensing capability information of the second transmission reception point includes sensing transmission capability and sensing reception capability of the second transmission reception point. The reporting mode for sensing information includes a reporting data type and a triggering condition of the sensing information. The data type includes one or more of raw data, processed data and a data processing result of the sensing information. The triggering condition includes a reporting period, a triggering event or other information.

It can be understood that when the first communication node requests the first transmission reception point to assist the second transmission reception in sensing, the third message may include information of the second transmission reception point, so that the communication node to which the first transmission reception point belongs determines whether to assist in the sensing. In some embodiments, the third message may also include the reporting mode for the sensing information, which is conducive for the first transmission reception point that assists in the sensing later, after acquiring the sensing information, to report the sensing result to the first communication node.

In some embodiments, the third message may have other names, such as an assistant sensing configuration message (assistant sensing configuration information), which is not limited thereto.

In some embodiments, the fourth communication node determines whether to assist in sensing according to the sensing capability information of the second transmission reception point in the third message. For example, it determines according to location information of the second transmission reception point, and in a case where the location information of the second transmission reception point meets a preset area range of the first transmission reception point, the fourth communication node may determine that the first transmission reception point is used to assist in sensing. Alternatively, in a case where signal power of the second transmission reception point is greater than preset signal power, the fourth communication node determines that the first transmission reception point is used to assist in sensing.

In S904, the fourth communication node sends a fourth message to the first communication node. Accordingly, the first communication node receives the fourth message sent from the fourth communication node.

The fourth message may be a response message to the above-mentioned third message. The fourth message includes a second indication information, and the second indication information is used to represent whether to agree sensing in a mode in which the first transmission reception point assists the second transmission reception point.

In some embodiments, in a case where the second indication is used to represent agreement on sensing in the mode in which the first transmission reception point assists the second transmission reception point, the fourth message also includes assistance sensing area information of the first transmission reception point. The assistance sensing area information is used to indicate geographic coordinate information of a sensing area supported by the first transmission reception point.

In some embodiments, in a case where the second indication is used to represent rejection on sensing in the mode in which the first transmission reception point assists the second transmission reception point, the fourth message also includes a third indication, and the third indication information is used to indicate a reason for the rejection. Exemplarily, the third indication information is used to indicate that the transmission environment is NLOS, or that the measured signal strength of the second transmission reception point is lower than a preset signal strength, or that the communication overhead of the first transmission reception point is too high to suitably divide a resource for transmitting a sensing signal.

In some embodiments, the fourth message may have other names, such as an assistant sensing configuration confirmation (assistant sensing configuration confirm) message, which is not limited thereto.

In S905, the first communication node sends a fifth message to the second communication node. Accordingly, the second communication node receives the fifth message sent from the first communication node.

The fifth message is used to indicate information of a third transmission reception point that supports to assist the second communication node in sensing, and the information of the third transmission reception point includes an identity of the third transmission reception point and an identity of a communication node to which the third transmission reception point belongs.

It can be understood that when the above-mentioned third communication node agrees to sense in the mode in which the first transmission reception point assists the second transmission reception point, the first transmission reception point is the third transmission reception point.

In some embodiments, the fifth message may also have other names, such as an assistant sensing confirmation (assistant sensing confirm) message, which is not limited thereto.

In some embodiments, the third transmission reception point may be one or more, which is not limited thereto.

In the embodiments of the present disclosure, the first communication node may provide information of candidate transmission reception points used to assist in sensing, to the second communication node, and the second communication node may select suitable first transmission reception points from the candidate transmission reception points and inform the first communication node; and after a negotiation process, the first communication node determines a third transmission reception point that supports to assist in sensing from the first transmission reception points. In this way, the second transmission reception point of the second communication node may utilize the third transmission reception point to acquire sensing information better, thereby improving the resource utilization of the sensing signal.

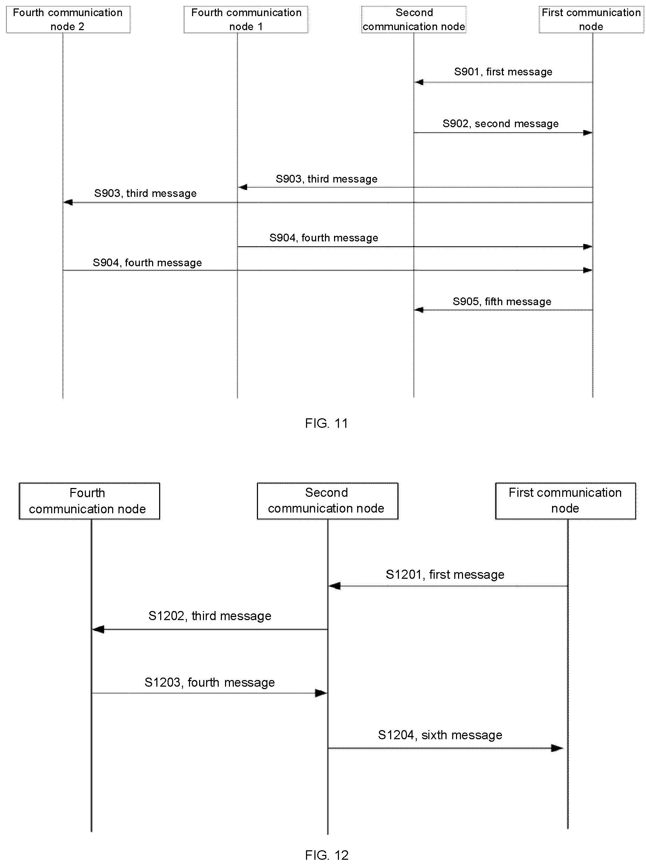

In some embodiments, referring to FIG. 11, in a case where the first transmission reception point is multiple and the multiple first transmission reception points belong to different fourth communication nodes, the above S903 may be implemented as follows: the first communication node sends the third message to the multiple fourth communication nodes (such as fourth communication node 1 and fourth communication node 2 in FIG. 11) via broadcast or multicast. In this way, it is conducive to reducing signaling overhead. Of course, the first communication node may also send third messages to the multiple fourth communication nodes via unicast.

In some embodiments, as shown in FIG. 12, the embodiments of the present disclosure also provide yet another sensing method, and the method includes the following S1201 to S1204.

In S1201, the first communication node sends a first message to the second communication node. Accordingly, the second communication node receives the first message sent from the first communication node.

The introduction for S1201 may be referred to the above description for S901, and will not be repeated here.

In some embodiments, the second communication node, after receiving the first message, may determine the first transmission reception point(s) from the candidate transmission reception point(s) based on the first message. The process of determining the first transmission reception point may be referred to the above description and will not be repeated here.

In some embodiments, the second communication node, after determining the first transmission reception point(s), may determine the third transmission reception point that supports to assist in sensing from the first transmission reception point(s). Exemplarily, the second communication node may determine the third transmission reception point by performing the following S1202 and S1203.

It should be understood that if the first transmission reception point determined by the second communication node is the third transmission reception point by default, the following S1202 and S1203 may not be performed.

In S1202, the second communication node sends a third message to the fourth communication node. Accordingly, the fourth communication node receives the third message sent from the second communication node.

The introduction for the third message may be referred to S903 in the method embodiment shown in FIG. 11, which will not be repeated here.

In S1203, the fourth communication node sends a fourth message to the second communication node. Accordingly, the second communication node receives the fourth message sent from the fourth communication node.

The introduction for the fourth message may be referred to S904 in the method embodiment shown in FIG. 11, which will not be repeated here.

In S1204, the second communication node sends a sixth message to the first communication node. Accordingly, the first communication node receives the sixth message sent from the second communication node.

The sixth message is used to indicate information of the third transmission reception point that supports to assist in sensing, the information of the third transmission reception point includes an identity of the third transmission reception point and an identity of a communication node to which the third transmission reception point belongs.

In some embodiments, the sixth message may have other names, such as an assistant sensing node report message, which is not limited thereto.

In the embodiments of the present disclosure, the first communication node may provide information of candidate transmission reception points used to assist in sensing, to the second communication node; and the second communication node may select suitable first transmission reception points from the candidate transmission reception points, and through a negotiation process, determine a third transmission reception point that supports to assist in sensing from the first transmission reception points. In this way, the second transmission reception point of the second communication node may utilize the third transmission reception point to acquire sensing information better, thereby improving the resource utilization of the sensing signal.

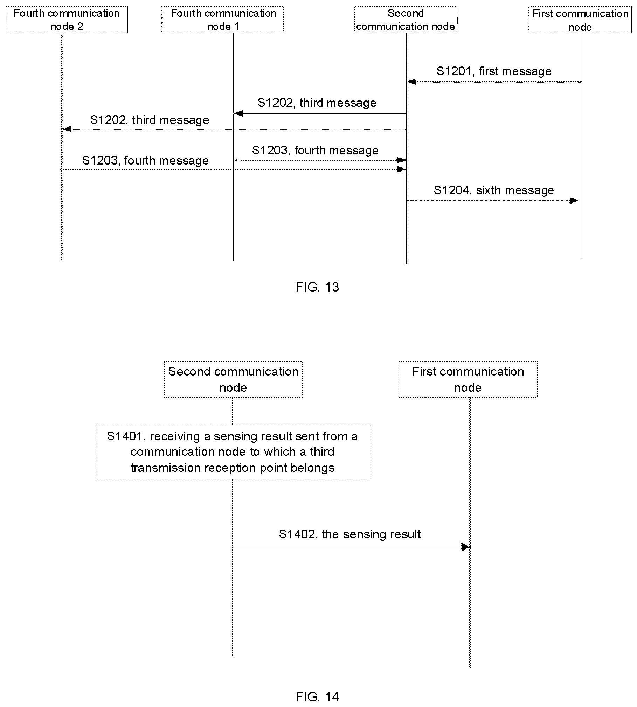

In some embodiments, referring to FIG. 13, in a case where the first transmission reception point is multiple and the first transmission reception points belong to different fourth communication nodes, the above S1202 may be implemented as follows: the second communication node sends the third message to multiple fourth communication nodes (such as fourth communication node 1 and fourth communication node 2 in FIG. 13) via broadcast or multicast. In this way, it is conducive to reducing signaling overhead. Of course, the second communication node may also send the third messages to multiple fourth communication nodes via unicast.

In some embodiments, as shown in FIG. 14, the embodiments of the present disclosure also provide yet another sensing method, and the method includes the following S1401 and S1402.

In S1401, the second communication node receives a sensing result sent from a communication node to which the third transmission reception point belongs.

The sensing result includes sensing information sensed by the third transmission reception point.

After the third transmission reception point is determined, the second transmission reception point of the second communication node sends a sensing signal. The sensing signal is reflected by the sensed target and then acquired by the third transmission reception point, and the third transmission reception point acquires the sensing information based on the reflected signal.

In some embodiments, the sensing information in the sensing result may be raw data collected by the third transmission reception point; or, the sensing information may be intermediate data processed from the collected raw data by the third transmission reception point; or, the sensing information may be a processed result obtained from the collected raw data by the third transmission reception point.

In some embodiments, the sensing result further includes an identity of the third transmission reception point and an identity of the communication node to which the third transmission reception point belongs, so that the receiving end knows the source of the sensing result.

In some embodiments, the sensing result also includes at least one of a type of the sensing information and a sensing direction. The type of the sensing information is used to indicate whether the sensing information is raw data, intermediate data, or a processed result.

In some embodiments, the sensing result may also be referred to as a sensing data report, which is not limited thereto.

In S1402, the second communication node sends the sensing result to the first communication node. Accordingly, the first communication node receives the sensing result sent from the second communication node.

In the embodiments of the present disclosure, after the third transmission reception point that supports to assist the second transmission reception point in sensing is determined, the effective sensing information for the sensing signal sent from the second transmission reception point is acquired through the third transmission reception point, so as to improve the resource utilization of the sensing signal.

In some embodiments, the second communication node may also report the sensing information sensed by its own transmission reception point to the first communication node.

It should be understood that the aforementioned method embodiments may be combined with each other. For example, by taking an example of combining the embodiment shown in FIG. 9 with the embodiment shown in FIG. 14, S901 to S905 may be first performed, to negotiate and determine the third transmission reception point; and then, S1401 and S1402 are performed, to acquire the sensing information sensed by the third transmission reception point.

It should be understood that, based on actual needs, those skilled in the art may add or reduce steps to/from the above-mentioned method embodiments. As an example, taking an example as the embodiment shown in FIG. 9, S903 and S904 in FIG. 9 may be optional. In a case where S903 and S904 are not performed, the first communication node may determine whether the first transmission reception point selected by the second communication node may be used as the third transmission reception point. As another example, taking an example as the embodiment shown in FIG. 9, S903 to S905 in FIG. 9 may be optional. In a case where S903 to S905 are not performed, the first communication node may default that the first transmission reception point selected by the second communication node is the third transmission reception point.

It can be understood that, to implement the above-mentioned functions, the communication node includes the corresponding hardware structures and/or software modules for performing the respective functions. Those skilled in the art should easily recognize that the present disclosure can be implemented in the form of hardware or a combination of hardware and computer software, in conjunction with the algorithmic steps of the respective examples described in the embodiments of the present disclosure. Whether a certain function is performed by hardware or computer software-driven hardware depends on the specific application and design constraints of the technical solutions. Professional technicians may use different methods to implement the described functions, for each specific application, but such an implementation should not be considered beyond the scope of the present disclosure.

In the embodiments of the present disclosure, the communication node may be divided into functional modules according to the above-mentioned method embodiments, and for example, each functional module may be divided corresponding to each function, or two or more functions may be integrated into one functional module. The above-mentioned integrated module may be implemented in the form of hardware or may be implemented in the form of software. It should be noted that the division of modules in the embodiments of the present disclosure is illustrative, and is merely a kind of logical functional division, and there may be other division methods in actual implementations. The example in which each functional module may be divided corresponding to each function is taken for explanation below.

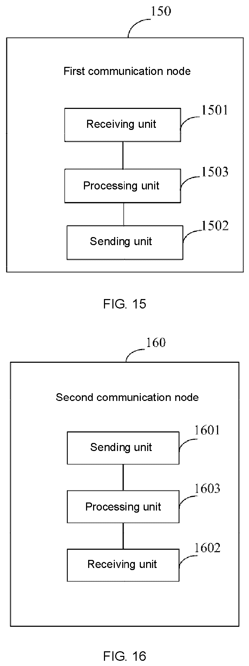

In a case of dividing the respective functional modules corresponding to the respective functions, FIG. 15 shows a structural schematic diagram of a first communication node involved in the above-mentioned embodiments. As shown in FIG. 15, a first communication node 150 includes a receiving unit 1501. In some embodiments, the first communication node may also include a sending unit 1502 and a processing unit 1503.

The receiving unit 1501 is configured to receive a capability message sent from a second communication node. The capability message includes sensing capability information of at least one transmission reception point of the second communication node.

In some embodiments, the sensing capability information includes sensing reception capability information and/or sensing transmission capability information.

In some embodiments, the sensing transmission capability information includes at least one of parameters as follows: subcarrier spacing of a sensing signal, a bandwidth of a sensing signal, a carrier reference point, a transmission period of a sensing signal, a transmission direction of a sensing signal, and power of a sensing signal.

In some embodiments, the sensing reception capability information includes at least one of parameters as follows: subcarrier spacing of a sensing signal, a bandwidth of a sensing signal, a carrier reference point, a reception direction of a sensing signal, and time configuration available for reception.

In some embodiments, the sensing capability information includes reception capability information and/or the transmission capability information of a remote interference management-reference signal, and the remote interference management-reference signal is used for sensing.

In some embodiments, the receiving unit 1501 is further configured to receive first indication information sent from the second communication node, where the first indication information is used to indicate that the remote interference management-reference signal is multiplexed as a sensing signal.

In some embodiments, the capability message further includes configuration information of at least one transmission reception point of the second communication node, the configuration information of the transmission reception point includes at least one of: a number of reception transmission antennas of the transmission reception point, a panel direction of the transmission reception point, location information of the transmission reception point, a sensing mode supported by the transmission reception point, a transmission environment of the transmission reception point, and a maximum proportion of available sensing resources. The maximum proportion of available sensing resources is used to indicate a proportion of communication resources for implementing a sensing function by the transmission reception point.

In some embodiments, the receiving unit 1501 is further configured to receive a measurement result sent from the second communication node, where the measurement result is a measurement result obtained by the second communication node measuring a signal of a surrounding third communication node and/or a transmission reception point of the third communication node, and the measurement result includes a measurement metric.

In some embodiments, the measurement result is reported actively, or reported passively.

In some embodiments, the sending unit 1502 is further configured to send transmission configuration information to the second communication node, where the transmission configuration information includes sending configuration information and/or reception configuration information of a sensing signal of a transmission reception point of the second communication node.

In some embodiments, the sending unit 1502 is further configured to send a first message to the second communication node, where the first message is used to indicate information of a candidate transmission reception point surrounding the second communication node.

In some embodiments, the information of the candidate transmission point includes an identity of the candidate transmission reception point, an identity of a communication node to which the candidate transmission reception point belongs, and location information of the candidate transmission reception point.

In some embodiments, the receiving unit 1501 is also configured to receive a second message sent from the second communication node, where the second message is used to indicate information of a first transmission reception point selected from the candidate transmission reception point by the second communication node, and an identity of a second transmission reception point in the second communication node. The first transmission reception point is used to assist the second transmission reception point in sensing, and the information of the first transmission reception point includes an identity of the first transmission reception point and an identity of a communication node to which the first transmission reception point belongs. The processing unit 1503 is configured to determine a third transmission reception point that supports to assist in sensing, from the first transmission reception point. The sending unit 1502 is further configured to send a fifth message to the second communication node, where the fifth message is used to indicate information of the third transmission reception point that supports to assist the second communication node in sensing, and the information of the third transmission reception point includes an identity of the third transmission reception point and an identity of a communication node to which the third transmission reception point belongs.

In some embodiments, the sending unit 1502 is further configured to send a third message to a fourth communication node. The fourth communication node is a communication node to which the first transmission reception point belongs, and the third message is used to request sensing in a mode in which the first transmission reception point assists the second transmission reception point. The receiving unit 1501 is further configured to receive a fourth message sent from the fourth communication node, where the fourth message includes second indication information, and the second indication information is used to represent whether to agree sensing in the mode in which the first transmission reception point assists the second transmission reception point.

In some embodiments, in a case where the second indication information is used to represent agreement on sensing in the mode in which the first transmission reception point assists the second transmission reception point, the fourth message further includes assistance sensing area information of the first transmission reception point.

In some embodiments, in a case where the second indication information is used to represent rejection on sensing in the mode in which the first transmission reception point assists the second transmission reception point, the fourth message further includes third indication information, and the third indication information is used to indicate a reason for the rejection.

In some embodiments, the sending unit 1502 is further configured to send a fifth message to the second communication node, where the fifth message is used to indicate information of a third transmission reception point that supports to assist the second communication node in sensing, and the information of the third transmission reception point includes an identity of the third transmission reception point and an identity of a communication node to which the third transmission reception point belongs.

In some embodiments, the receiving unit 1501 is further configured to receive a sixth message sent from the second communication node, where the sixth message is used to indicate information of a third transmission reception point that supports to assist in sensing, and the information of the third transmission reception point includes an identity of the third transmission reception point and an identity of a communication node to which the third transmission reception point belongs.

In some embodiments, the receiving unit 1501 is further configured to receive a sensing result sent from the second communication node, where the sensing result includes sensing information sensed by the third transmission reception point.

The description for the above methods may be referred to the aforementioned method embodiments, and will not be repeated here. In addition, any explanation for the first communication node 150 provided above and the description of the beneficial effects may be referred to the corresponding method embodiments above mentioned, and will not be repeated here.

In a case of dividing the respective functional modules corresponding to the respective functions, FIG. 16 shows a structural schematic diagram of a second communication node involved in the above-mentioned embodiments. As shown in FIG. 16, a second communication node 160 includes a sending unit 1601. In some embodiments, the second communication node may also include a receiving unit 1602 and a processing unit 1603.

The sending unit 1601 is configured to send a capability message to a first communication node, the capability message including sensing capability information of at least one transmission reception point of the second communication node.

In some embodiments, the capability message includes sensing reception capability information and/or sensing transmission capability information.

In some embodiments, the sensing transmission capability information includes at least one of parameters as follows: subcarrier spacing of a sensing signal, a bandwidth of a sensing signal, a carrier reference point, a transmission period of a sensing signal, a transmission direction of a sensing signal, and power of a sensing signal.

In some embodiments, the sensing reception capability information includes at least one of parameters as follows: subcarrier spacing of a sensing signal, a bandwidth of a sensing signal, a carrier reference point, a reception direction of a sensing signal, and time configuration available for reception.

In some embodiments, the sensing capability information includes reception capability information and/or the transmission capability information of a remote interference management-reference signal, and the remote interference management-reference signal is used for sensing.

In some embodiments, the sending unit 1601 is further configured to send first indication information to the first communication node, where the first indication information is used to indicate that the remote interference management-reference signal is multiplexed as a sensing signal.

In some embodiments, the capability message includes configuration information of at least one transmission reception point of the second communication node, the configuration information of the transmission reception point includes at least one of: a number of reception transmission antennas of the transmission reception point, a panel direction of the transmission reception point, location information of the transmission reception point, a sensing mode supported by the transmission reception point, a transmission environment of the transmission reception point, and a maximum proportion of available sensing resources. The maximum proportion of available sensing resources is used to indicate a proportion of communication resources for implementing a sensing function by the transmission reception point.

In some embodiments, the processing unit 1603 is configured to measure a signal of a surrounding third communication node and/or a transmission reception point of the third communication node, to obtain a measurement result. The measurement result includes a measurement metric. The sending unit 1601 is further configured to send the measurement result to the first communication node.

In some embodiments, the measurement result is reported actively, or reported passively.

In some embodiments, the receiving unit 1602 is further configured to receive transmission configuration information sent from the first communication node, where the transmission configuration information includes sending configuration information and/or reception configuration information of a sensing signal of a transmission reception point of the second communication node.

In some embodiments, the receiving unit 1602 is further configured to receive a first message sent from the first communication node, where the first message is used to indicate information of a candidate transmission reception point surrounding the second communication node.

In some embodiments, the information of the candidate transmission point includes an identity of the candidate transmission reception point, an identity of a communication node to which the candidate transmission reception point belongs, and location information of the candidate transmission reception point.

In some embodiments, the processing unit 1603 is further configured to determine a first transmission reception point from the candidate transmission reception point based on the first message, where the first transmission reception point is used to assist a second transmission reception point of the second communication node in sensing; and determine a third transmission reception point that supports to assist in sensing, from the first transmission reception point. The sending unit 1601 is further configured to send a sixth message to the first communication node, where the sixth message is used to indicate information of the third transmission reception point that supports to assist the second transmission reception point in sensing, and the information of the third transmission reception point includes an identity of the third transmission reception point and an identity of a communication node to which the second transmission reception point belongs.

In some embodiments, the sending unit 1601 is further configured to send a third message to a fourth communication node. The fourth communication node is a communication node to which the first transmission reception point belongs, and the third message is used to request sensing in a mode in which the first transmission reception point assists the second transmission reception point. The receiving unit 1602 is further configured to receive a fourth message sent from the fourth communication node, where the fourth message includes second indication information, and the second indication information is used to represent whether to agree sensing in the mode in which the first transmission reception point assists the second transmission reception point.

In some embodiments, in a case where the second indication information is used to represent agreement on sensing in the mode in which the first transmission reception point assists the second transmission reception point, the fourth message further includes assistance sensing area information of the first transmission reception point.

In some embodiments, in a case where the second indication information is used to represent rejection on sensing in the mode in which the first transmission reception point assists the second transmission reception point, the fourth message further includes third indication information, and the third indication information is used to indicate a reason for the rejection.

In some embodiments, the receiving unit 1602 is further configured to receive a sensing result sent from the communication node to which the third transmission reception point belongs, where the sensing result includes sensing information sensed by the third transmission reception point. The sending unit 1603 is further configured to send the sensing result to the first communication node.

The description for the above methods may be referred to the aforementioned method embodiments, and will not be repeated here. In addition, any explanation for the second communication node 160 provided above and the description of the beneficial effects may be referred to the corresponding method embodiments above mentioned, and will not be repeated here.

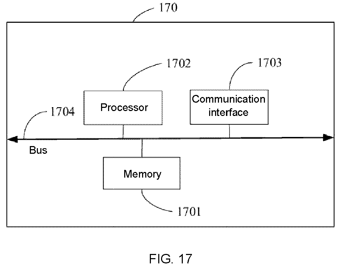

In a case of implementing the functions of the integrated modules mentioned above in the form of hardware, the communication nodes involved in the embodiments may use a structure of a sensing apparatus shown in FIG. 17. The communication apparatus also referred to as a sensing apparatus, to implement the sensing method provided in the embodiments of the present disclosure. As shown in FIG. 17, the sensing apparatus 170 includes a processor 1702 and a bus 1704. In some embodiments, the sensing apparatus may also include a memory 1701. In some embodiments, the sensing apparatus may also include a communication interface 1703.

The processor 1702 may implement or perform various exemplary logical blocks, modules and circuits described in conjunction with the embodiments of the present disclosure. The processor 1702 may be a central processing unit, a general-purpose processor, a digital signal processor, an application specific integrated circuit, a field programmable gate array or other programmable logic devices, a transistor logic device, a hardware component or any combination thereof, which may implement or perform various exemplary logical blocks, modules and circuits described in conjunction with the embodiments of the present disclosure. The processor 1702 may also be a combination that implements computing functions, for example, including a combination of one or more microprocessors, a combination of a digital signal processor (DSP) and a microprocessor, or the like.

The communication interface 1703 is configured to connect with other devices via a communication network. The communication network may be an Ethernet, a radio access network, a wireless local area network (WLAN), or the like.

The memory 1701 may be, but not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As an implementation, the memory 1701 may exist independently of the processor 1702, and the memory 1701 may be connected to the processor 1702 via the bus 1704 and is used for storing instructions or program codes. The processor 1702, when calling and executing the instructions or program codes stored in the memory 1701, is capable of implementing the sensing method provided by the embodiments of the present disclosure.

In another implementation, the memory 1701 may also be integrated with the processor 1702.

The bus 1704 may be an extended industry standard architecture (EISA) bus or the like. Buses 1704 may be divided into address buses, data buses, control buses, and the like. For the convenience of representation, only one thick line is used in FIG. 8 for representation, but it does not mean that there is only one bus or one type of bus.

Some embodiments of the present disclosure provide a computer-readable storage medium (e.g., a non-transitory computer-readable storage medium), and the computer-readable storage medium has stored computer program instructions therein that, when running on a computer, cause the computer to perform the sensing method as described in any of the above-mentioned embodiments.

Exemplarily, the above-mentioned computer-readable storage medium may include, but be not limited to, a magnetic storage device (e.g., a hard disk, a floppy disk or a magnetic tape, etc.), an optical disk (e.g., a Compact Disk (CD) or a Digital Versatile Disk (DVD), etc.), a smart card and a flash memory device (e.g., an Erasable Programmable Read-Only Memory (EPROM), a card, a stick or a key driver, etc.). The various computer-readable storage media described in the present disclosure may represent one or more devices and/or other machine-readable storage media for storing information. The term "machine-readable storage medium" may include, but not limited to, a radio channel and various other media capable of storing, containing, and/or carrying instructions and/or data.

The embodiments of the present disclosure also provide a computer program product containing instructions, and the computer program product, when running on a computer (or a processor of a computer), causes the computer (or the processor of the computer) to perform the sensing method described in any embodiment of the above embodiments.

In the embodiments of the present disclosure, acquiring the sensing capability information of each transmission reception point of the communication node, and transmitting or receiving the sensing signal according to the sensing capability information of the transmission reception point, solves the problem that the impacts of the environment on the signals during the transmission of the sensing signals cannot be determined, so that the sensing information acquired after a part of the signals are transmitted cannot be utilized, thereby resulting in a waste in signal resources; and reduces a waste in resources and improves the transmission efficiency of the sensing signal.

The foregoing is only the specific implementations of the present disclosure, but the protection scope of the present disclosure is not limited thereto, and any changes or substitutions within the scope of the technologies disclosed in the present disclosure should be covered within the protection scope of the present disclosure. Therefore, the protection scope of the present disclosure should be based on the protection scope of claims.

## Claims

1. A sensing method, **characterized by** being applied to a first communication node, and comprising:
receiving a capability message sent from a second communication node, the capability message comprising sensing capability information of at least one transmission reception point of the second communication node.

2. The method according to claim 1, wherein the sensing capability information comprises sensing reception capability information and/or sensing transmission capability information.

3. The method according to claim 2, wherein the sensing transmission capability information comprises at least one of parameters as follows: subcarrier spacing of a sensing signal, a bandwidth of a sensing signal, a carrier reference point, a transmission period of a sensing signal, a transmission direction of a sensing signal, and power of a sensing signal.

4. The method according to claim 2, wherein the sensing reception capability information comprises at least one of parameters as follows: subcarrier spacing of a sensing signal, a bandwidth of a sensing signal, a carrier reference point, a reception direction of a sensing signal, and time configuration available for reception.

5. The method according to claim 1, wherein the sensing capability information comprises reception capability information and/or the transmission capability information of a remote interference management-reference signal, and the remote interference management-reference signal is used for sensing.

6. The method according to claim 5, further comprising:
receiving first indication information sent from the second communication node, wherein the first indication information is used to indicate that the remote interference management-reference signal is multiplexed as a sensing signal.

7. The method according to any one of claims 1 to 6, wherein the capability message further comprises configuration information of at least one transmission reception point of the second communication node, the configuration information of the transmission reception point comprises at least one of: a number of reception transmission antennas of the transmission reception point, a panel direction of the transmission reception point, location information of the transmission reception point, a sensing mode supported by the transmission reception point, a transmission environment of the transmission reception point, and a maximum proportion of available sensing resources; wherein the maximum proportion of available sensing resources is used to indicate a proportion of communication resources for implementing a sensing function by the transmission reception point.

8. The method according to claim 1, further comprising:
receiving a measurement result sent from the second communication node, wherein the measurement result is a measurement result obtained by the second communication node measuring a signal of a surrounding third communication node and/or a transmission reception point of the third communication node, and the measurement result comprise a measurement metric.

9. The method according to claim 8, wherein the measurement result is reported actively, or reported passively.

10. The method according to claim 1, further comprising:
sending transmission configuration information to the second communication node, wherein the transmission configuration information comprises sending configuration information and/or reception configuration information of a sensing signal of a transmission reception point of the second communication node.

11. The method according to claim 1, wherein after receiving the capability message sent from the second communication node, the method further comprises:
sending a first message to the second communication node, wherein the first message is used to indicate information of a candidate transmission reception point surrounding the second communication node.

12. The method according to claim 11, wherein the information of the candidate transmission reception point comprises an identity of the candidate transmission reception point, an identity of a communication node to which the candidate transmission reception point belongs, and location information of the candidate transmission reception point.

13. The method according to claim 11, further comprising:
receiving a second message sent from the second communication node, wherein the second message is used to indicate information of a first transmission reception point selected from the candidate transmission reception point by the second communication node, and an identity of a second transmission reception point in the second communication node, wherein the first transmission reception point is used to assist the second transmission reception point in sensing, and the information of the first transmission reception point comprises an identity of the first transmission reception point and an identity of a communication node to which the first transmission reception point belongs;
determining a third transmission reception point that supports to assist in sensing, from the first transmission reception point; and
sending a fifth message to the second communication node, wherein the fifth message is used to indicate information of the third transmission reception point that supports to assist the second communication node in sensing, and the information of the third transmission reception point comprises an identity of the third transmission reception point and an identity of a communication node to which the third transmission reception point belongs.

14. The method according to claim 13, wherein determining the third transmission reception point that supports to assist in sensing, from the first transmission reception point, comprises:
sending a third message to a fourth communication node, wherein the fourth communication node is a communication node to which the first transmission reception point belongs, and the third message is used to request sensing in a mode in which the first transmission reception point assists the second transmission reception point;
receiving a fourth message sent from the fourth communication node, wherein the fourth message comprises second indication information, and the second indication information is used to represent whether to agree sensing in the mode in which the first transmission reception point assists the second transmission reception point.

15. The method according to claim 14, wherein
in a case where the second indication information is used to represent agreement on sensing in the mode in which the first transmission reception point assists the second transmission reception point, the fourth message further comprises assistance sensing area information of the first transmission reception point; or
in a case where the second indication information is used to represent rejection on sensing in the mode in which the first transmission reception point assists the second transmission reception point, the fourth message further comprises third indication information, and the third indication information is used to indicate a reason for the rejection.

16. The method according to claim 11, further comprising:
receiving a sixth message sent from the second communication node, wherein the sixth message is used to indicate information of a third transmission reception point that supports to assist the second communication node in sensing, and the information of the third transmission reception point comprises an identity of the third transmission reception point and an identity of a communication node to which the third transmission reception point belongs.

17. The method according to claim 13 or 16, further comprising:
receiving a sensing result sent from the second communication node, wherein the sensing result comprises sensing information sensed by the third transmission reception point.

18. A sensing method, **characterized by** being applied to a second communication node, and comprising:
sending a capability message to a first communication node, the capability message comprising sensing capability information of at least one transmission reception point of the second communication node.

19. The method according to claim 18, wherein the capability message comprises sensing reception capability information and/or sensing transmission capability information.

20. The method according to claim 19, wherein the sensing transmission capability information comprises at least one of parameters as follows: subcarrier spacing of a sensing signal, a bandwidth of a sensing signal, a carrier reference point, a transmission period of a sensing signal, a transmission direction of a sensing signal, and power of a signal.

21. The method according to claim 19, wherein the sensing reception capability information comprises at least one of parameters as follows: subcarrier spacing of a sensing signal, a bandwidth of a sensing signal, a carrier reference point, a reception direction of a sensing signal, and time configuration available for reception.

22. The method according to claim 18, wherein the sensing capability information comprises reception capability information and/or the transmission capability information of a remote interference management-reference signal, and the remote interference management-reference signal is used for sensing.

23. The method according to claim 22, further comprising:
sending first indication information to the first communication node, wherein the first indication information is used to indicate that the remote interference management-reference signal is multiplexed as a sensing signal.

24. The method according to any one of claims 18 to 23, wherein the capability message further comprises configuration information of at least one transmission reception point of the second communication node, the configuration information of the transmission reception point comprises at least one of: a number of reception transmission antennas of the transmission reception point, a panel direction of the transmission reception point, location information of the transmission reception point, a sensing mode supported by the transmission reception point, a transmission environment of the transmission reception point, and a maximum proportion of available sensing resources; wherein the maximum proportion of available sensing resources is used to indicate a proportion of communication resources for implementing a sensing function by the transmission reception point.

25. The method according to claim 18, further comprising:
measuring a signal of a surrounding third communication node and/or a transmission reception point of the third communication node, to obtain a measurement result, wherein the measurement result comprises a measurement metric; and
sending the measurement result to the first communication node.

26. The method according to claim 25, wherein the measurement result is reported actively, or reported passively.

27. The method according to claim 18, further comprising:
receiving transmission configuration information sent from the first communication node, wherein the transmission configuration information comprises sending configuration information and/or reception configuration information of a sensing signal of a transmission reception point of the second communication node.

28. The method according to claim 18, wherein, after sending the capability message to the first communication node, the method further comprises:
receiving a first message sent from the first communication node, wherein the first message is used to indicate information of a candidate transmission reception point surrounding the second communication node.

29. The method according to claim 28, wherein the information of the candidate transmission reception point comprises an identity of the candidate transmission reception point, an identity of a communication node to which the candidate transmission reception point belongs, and location information of the candidate transmission reception point.

30. The method according to claim 28, further comprising:
sending a second message to the first communication node, wherein the second message is used to indicate information of a first transmission reception point selected from the candidate transmission reception point by the second communication node, and an identity of a second transmission reception point in the second communication node, wherein the first transmission reception point is used to assist the second transmission reception point in sensing, and the information of the first transmission reception point comprises an identity of the first transmission reception point and an identity of a communication node to which the first transmission reception point belongs; and
receiving a fifth message sent from the first communication node, wherein the fifth message is used to indicate information of a third transmission reception point that supports to assist the second communication node in sensing, and the information of the third transmission reception point comprises an identity of the third transmission reception point and an identity of a communication node to which the third transmission reception point belongs.

31. The method according to claim 28, further comprising:
determining a first transmission reception point from the candidate transmission reception point based on the first message, wherein the first transmission reception point is used to assist a second transmission reception point of the second communication node in sensing;
determining a third transmission reception point that supports to assist in sensing, from the first transmission reception point; and
sending a sixth message to the first communication node, wherein the sixth message is used to indicate information of the third transmission reception point that supports to assist the second transmission reception point in sensing, and the information of the third transmission reception point comprises an identity of the third transmission reception point and an identity of a communication node to which the third transmission reception point belongs.

32. The method according to claim 31, further comprising:
sending a third message to a fourth communication node, wherein the fourth communication node is a communication node to which the first transmission reception point belongs, and the third message is used to request sensing in a mode in which the first transmission reception point assists the second transmission reception point; and
receiving a fourth message sent from the fourth communication node, wherein the fourth message comprises second indication information, and the second indication information is used to represent whether to agree sensing in the mode in which the first transmission reception point assists the second transmission reception point.

33. The method according to claim 32, wherein
in a case where the second indication information is used to represent agreement on sensing in the mode in which the first transmission reception point assists the second transmission reception point, the fourth message further comprises assistance sensing area information of the first transmission reception point; or
in a case where the second indication information is used to represent rejection on sensing in the mode in which the first transmission reception point assists the second transmission reception point, the fourth message further comprises third indication information, and the third indication information is used to indicate a reason for the rejection.

34. The method according to claim 30 or 31, further comprising:
receiving a sensing result sent from the communication node to which the third transmission reception point belongs, wherein the sensing result comprises sensing information sensed by the third transmission reception point; and
sending the sensing result to the first communication node.

35. A sensing apparatus, **characterized by** comprising: a processor and a memory;
wherein the memory has stored instructions executable by the processor; and
the processor is configured to perform the instructions so that the sensing apparatus implements the sensing method according to any one of claims 1 to 34.

36. A computer-readable storage medium, **characterized in that** computer instructions are stored on the computer-readable storage medium, and the computer instructions, when executed by a processor, cause the processor to perform the sensing method according to any one of claims 1 to 34.
